# EUROPEAN PATENT SPECIFICATION

(11) **EP 0 565 235 B1**
(45) Date of publication and mention of the grant of the patent: **22.12.1999**
(21) Application number: 93301710.5
(22) Date of filing: 08.03.1993
(51) Int. Cl.: C08G 18/42, C08G 18/73, C08G 18/75

(54) **Aliphatic polyester containing urethane bonds**
Urethanbindungen enthaltender aliphatischer Polyester
Polyester aliphatique contenant des liaisons uréthane

(30) Priority: 10.04.1992 JP 9111892
(43) Date of publication of application: 13.10.1993
(73) Proprietor: SHOWA HIGHPOLYMER CO., LTD., Tokyo (JP)
(72) Inventor: Takiyama, Eiichiro, Kanagawa-ken (JP); Niikura, Isamu, Gunma-ken (JP); Seki, Shigekatu, Gunma-ken (JP); Fujimaki, Takashi, Yokohama-shi, Kanagawa-ken (JP)
(74) Representative: Boff, James Charles

(56) References cited:
- EP-A- 0 172 993
- EP-A- 0 192 946
- EP-A- 0 219 086
- EP-A- 0 488 617
- US-A- 2 999 851
- CHEMICAL ABSTRACTS, vol. 99, no. 8 Columbus, Ohio, US; abstract no. 54490x,

## Description

### BACKGROUND OF THE INVENTION

The present invention relates to the use in the manufacture of certain biodegradable articles of a high molecular weight saturated aliphatic polyester containing urethane bonds.

It is no exaggeration to say that high molecular weight polyesters generally used for molding films, fibers and other products and having a number average molecular weight of at least 10,000 are limited to polyethylene terephthalate which is a condensation product of terephthalic acid (including dimethyl ester) and ethylene glycol and polybutylene terephthalate which is a condensation produnt of of terephthalic acid and 1,4-butanediol.

It is known that the use of naphthalene-2,6- dicarboxylic acid in place of terephthalic acid improves the heat resistance and strength of the polyester obtained. However, there is no known example in which a polyester synthesized by using an aliphatic dicarboxylic acid is molded into a film, fibers or the like, and brought into practical use.

The polyesters formed by using an aliphatic carboxylic acid (referred to as "aliphatic polyester" hereinafter) cannot be brought into practical use for the following reasons. Aliphatic polyesters generally have a melting point of as low as 100°C or less, but also poor thermal stability during melting. For example, after the number average molecular weight becomes constant at about 15,000, it tends to decrease with the passage of time due to decomposition reactions taking precedence over growth reactions. Even more important, aliphatic polyesters exhibit physical properties, particularly tensile strength and drawing properties, which are inferior to those ot polyethylene terephthalate at similar level of number average molecular weight of about 15,000, and thus they have not been found practicable.

It seems that research promising to improve the physical properties of aliphatic polyesters by increasing the number average molecular weight thereof has not yet been developed because of their poor thermal stability.

However, as a result of investigations performed by the inventors for increasing the molecular weight ot such thermally decomposable aliphatic polyesters as much as possible, it was found that a high molecular weight aliphatic polyester containing urethane bonds can be synthesized smoothly, and unexpectedly, without the danger of gelation, by adding a diisocyanate to a polyesterdiol in a melt state, said polyesterdiol having a number average molecular weight (Mn) of at least 5,000, preferably at last 10,000, a weight average molecular weight (Mw) of at least 15,000, preferably 30,000 and a molecular weight distribution (Mw/Mn) of at least 2.5, prefereably 3 to 8, with substantially hydroxyl groups at the terminals thereof. This finding led to the achievement of the present invention.

Accordingly, an object or the present invention is the use of a high molecular weight saturated aliphatic polyester containing urethane bonds, and exhibiting excellent thermal stability, strength and moldability in the manufacture of certain biodegradable articles.

### SUMMARY OF THE INVENTION

The present invention relates to the use of a high molecular weight saturated aliphatic polyester as a biodegradable material as set out in the accompanying claims.

The aliphatic polyester containing urethane bonds has a high molecular weight, excellent thermal stability, strength and moldability. Since the polyester has biodegradability, it is expected to be used for various molded biodegradable products such as shopping bags, garbage bags, agricultural films, cosmetic detergent and bleaching agent containers, fishing line, fishing nets, rope, binding materials, surgical gut or sanitary cover stock.

### BRIEF DESCRIPTION OF THE DRAWINGS

Fig. 1 shows an infrared spectrum of the aliphatic polyester (A) obtained in Example 1;
Fig. 2 shows a 13C-NMR spectrum of the aliphatic polyester (A) obtained in Example 1;
Fig. 3 shows an infrared spectrum of the aliphatic polyester (B) obtained in Example 20;
Fig. 4 shows a 13C-NMR spectrum of the aliphatic polyester obtained in Example 20;
Fig. 5 shows a GPC chart of the polyesterdiol (VIII) obtained in Example 29;
Fig. 6 shows a GPC chart of the aliphatic polyester (C) obtained in Example 29;
Fig. 7 shows a GPC chart of the polyesterdiol (IX) obtained in Example 30; and
Fig. 8 shows a GPC chart of the aliphatic polyester (D) obtained in Example 30.

### DETAILED DESCRIPTION OF THE INVENTION

The present invention is described in further detail below.

When the polyesterdiol expressed by the above formula B has a number average molecular weight of at least 10,000 and/or when the aliphatic polyester containing urethane bonds has a number average molecular weight of at least 20,000, the polyester obtained exhibits excellent mechanical strength. In addition, when R¹ is an alkylene group indicated by

(̵CH₂-CH₂)̵p

(wherein p is 1 or 2), and when R² is an alkylene group indicated by

(̵CH₂-CH₂)̵q

(wherein q is 1 or 2), the aliphatic polyester obtained exhibits crystallinity, a high melting point and good moldability.

According to the present invention the physical properties of a high-crystallinity aliphatic polyester can be significantly improved with increase of molecular weight.

Particularly, when R¹ is a tetramethylene group, and R² is an ethylene group, a high molecular weight and high crystallinity polyester having excellent physical properties is obtained.

Examples of group R³ include the following: 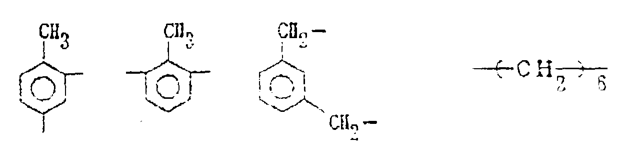 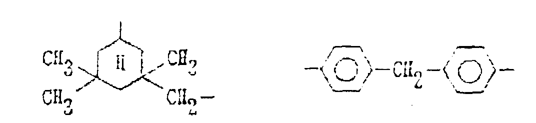 However, an aliphatic or alicyclic group, particularly a hexamethylene group, is preferable in view of the hue of the aliphatic polyester produced and reactivity with the polyesterdiol.

In the present invention, none of R¹, R² and R³ is limited to one kind as they may contain two or more kinds unless apart from the spirit of the present invention. In this case, a method is employed in which at least two glycols or dicarboxylic acids, which are reaction components of polyesterdiol, are mixed and subjected to random co-condensation or block co-condensation to synthesize a multicomponent composite polyesterdiol which is then reacted to form urethane bonds, or in which different polyesterdiols are reacted to form urethane bonds.

The polyesterdiol expressed by the formula B below must have a number average molecular weight (Mn) of at least 5,000, a weight average malecular weight (Mw) of at least 15,000 and a molecular weight distribution (Mw/Mn) of at least 2.5, in order to prevent gelation during the formation of urethane bonds by a diisocyanate. However, the polyesterdiol should preferably have a number average molecular weight (Mn) of at least 10,000, a weight average malecular weight (Mw) of at least 30,000, and a molecular weight distribution (Mw/Mn) of 3 to 8, in order to obtain a polymer having good physical properties, particularly film moldability.

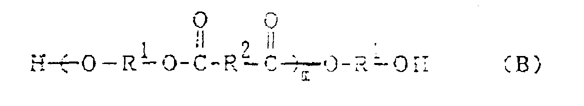

The aliphatic polyester contains at least two urethane bonds due to its method of synthesis, and the number of urethane bonds is about 1 relative to a number average molecular weight of at least 5,000, preferably at least 10,000.

The aliphatic polyester containing urethane bonds preferably has a number average molecular weight of at least 10,000, more preferably 20,000, in view of mechanical strength of molded product and moldability. Although the upper limit of the number average molecular weight is not provided, the upper limit is 70,000, preferably 50,000, in view of molded products such as film or the like. A weight average molecular weight is necesarily at least 30,000 and 100,00 to 1,000,000 is optimum for applications to general purpose molding machines. The molecular weight distribution (Mw/Mn) is necessarily at aleast 2.5 and preferably about 3 to 8.

It is also necessary that the aliphatic polyesters containing urethane bonds have a viscosity of at least 10 poise, preferably at least 100 poise, in a 10 % o-chlorophenol solution at 25°C . If the viscosity is lower than the above value, a tough molded product cannot be obtained. Similarly, an aliphatic polyester having a melting point of at least 60°C , preferably at least 90°C , and a melt flow rate of 0.01 to 1,000 g/10 min is useful for molding.

The aliphatic polyester containing urethane bonds can be synthesized by the following method:

After a glycol and an aliphatic dicarboxylic acid or an anhydride thereof are esterified with an excess of glycol present until a desired acid value (preferably 10 or less) is obtained, the resultant product is subjected to a glycol elimination reaction in the presence of a reaction catalyst such as a titanium compound or the like to synthesize a polyesterdiol having a number average molecular weight of at least 5,000 and substantially hydroxyl groups at the terminals thereof. The thus-synthesized polyesterdiol in a melt state is then reacted with a diisocyanate in an amount of about 0.1 to 5 parts by weight relative to 100 parts by weight of a polyesterdiol. The amount of the diisocyanate added depends upon the molecular weight of the polyesterdiol.

Examples of glycols wich can be used as a reaction component include those having a straight chain alkylene group with even number carbon atoms of 2, 4, 6, 8 and 10 such as: ethylene glycol, 1,4-butanediol, 1,6-hexanediol, 1,8-octanediol, 1,10-decanediol, and mixtures thereof.

Of these glycols, those having a smaller number of carbon atoms, such as ethylene glycol, 1,4-butanediol and 1,6-hexanediol, are preferable because they have high melting points and permit synthesis of an aliphatic polyester exhibiting film moldability. In particular, ethylene glycol and 1,4-butanediol are most suitable because they produce good results.

Examples of aliphatic dicarboxylic acids or anhydrides thereof include those having a straight chain alkylene group with even number carbon atoms of 2, 4, 6, 8 and 10 such as: succinic acid, adipic acid, suberic acid, sebacic acid, 1,10-decanedioic acid, succinic anhydride and mixtures thereof. Of these dicarboxylic acids, dicarboxylic acids having a smaller number of carbon atoms, such as succinic acid, adipic acid and succinic anhydride, are preferable because they have high melting points and permit synthesis of polyesters exhibiting film moldability. In particular, succinic acid, succinic anhydride and an acid mixture of succinic acid or succinic anhydride and another dicarboxylic acid such as adipic acid, suberic acid, sebacic acid or 1,10-decandioic acid are preferable.

In the system of an acid mixture containing two or more acid components, for example, succinic acid and other dicarboxylic acids, the mixing ratio of succinic acid is at least 70 mol%, preferably at least 90 mol%, and the mixing ratio of the other carboxylic acids is 30 mol% or less, preferably 10 mol% or less.

A combination of 1,4-butanediol and succinic acid or succinic anhydride (the melting point of the polyester obtained: 110 to 115°C) and a combination of ethylene glycol and succinic acid or succinic anhydride (the melting point of the polyester obtained: about 105°C) are particularly preferable for the present invention because the combinations exhibit melting points close to that of polyethylene.

Another polyhydric alcohol, polybasic acid, oxycarboxylic acid and the like can, of course, be used within limits which do not adversely affect the object of the present invention.

Since the polyesterdiol has substantially hydroxyl groups at the terminals thereof, the glycol component and the acid component must be used in synthetic reaction so that the glycol component is present in slight excess. The ratio of the glycol component is preferably 1.05 to 1.2 moles per mole of acid component.

The method of synthesizing the polyesterdiol is not limited, and a polyesterdiol having a high molecular weight is generally synthesized by esterification and then glycol elimination reaction (or deglycolization).

A small amount of catalyst must be used in the glycol elimination reaction. Examples of useful catalysts include metallic compounds of Ti, Ge, Zn, Fe, Mn, Co, Zr, V, Ir, La, Ce, Li, Ca and the like, preferably organometallic compounds thereof such as organic acid salts, alkoxides, acetylacetonato and the like.

However, when the polyester obtained is used as a packing material for foods, for example, it is desired that the amount of the catalyst used is as small as possible.

A titanium compound exhibits no toxicity which is possessed by heavy metals such as lead, tin, antimony, cadmium, chromium and the like (for example, "Sax" Toxic Substance Data Book, translated by Shizuo Fujiyama, Maruzen K. K., 360p). If a practical high molecular weight polyester can be produced by using a very small amount of titanium compound, it is expected that the polyester can suitably be used as a packing material for foods.

Of titanium compounds, dibutoxydiacetoacetoxy titanium (Narsem Titanium, produced by Nippon Chemical Industry Co., Ltd.), tetraethoxytitanium, tetrapropoxytitanium, tetrabutoxytitaniium and the like are preferable because of their high activity. All these titanium compounds are commercially available.

The ratio of the catalyst used is generally 0.01 parts by weight to 3 parts by weight, preferably 0.05 to 2 parts by weight, relative to 100 parts by weight of polyesterdiol. However, when a highly active titanium compound is used, the use of the titanium compound in only a small amount of about 0.0001 parts by weight is effective.

The catalyst may be added either in the first stage of the esterification or immediately before the glycol elimination reaction.

The esterification is effected at 160 to 230°C in an inert gas atmosphere. An esterification temperature lower than the above value causes the reaction to proceed slowly, and exhibits poor practicability. An esterification temperature higher than the above value causes a great danger of decomposition, and thus is preferably avoided. The esterification in the first stage is preferably performed at a temperature within the range of 180 to 220°C .

The esterification is performed until the acid value reaches 15 or less, preferably 10 or less. The polyester obtained has hydroxyl groups at the terminals thereof and a number average molecular weight of about 1,000 to 3,000. In this case, the polyester having a higher molecular weight is desirable because the molecular weight therof can be increased smoothly by the glycol elimination reaction.

The glycol elimination reaction is performed at 170 to 230°C under a reduced pressure of 5 Torr or less, more preferably at 180 to 220°C under high vacuum at 1 Torr or less from the viewpoint of the reaction speed and prevention of decomposition.

In the present invention, it is necessary that the polyesterdiols have substantially hydroxyl groups at the terminals thereof and a number average molecular weight (Mn) of at least 5,000, preferably at least 10,000, weight average malecular weight (Mw) of at least 15,000, preferably 30,000 and molecular weight distribution (Mw/Mn) of at least 2.5. A polyesterdiol having a low molecular weight, for example, a number average molecular weight of about 2,500, has the following disadvantages. A final resin having good physical properties cannot be obtained even by using 0.1 to 5 parts by weight of diisocyanate in the present invention. In addition, gelation is sometimes recognized during a reation in melt state in a small amount of 0.1 to 5 parts by weight of diisocyanate depend on an amount thereof. If the number (i.e., molecular size) of terminal hydroxyl groups per weight is greater than acid value of about 15 mg-KOH/polymer g, the reaction can not be safely effected. A polyesterdiol having a number average molecular weight (Mn) of at least 5,000 as used in the present invention inevitably exhibits a hydroxyl value in the above-mentioned level or less and thus permits an aliphatic polyester having a high molecular weight to be safely synthesized by using a small amount of diisocyanate under severe conditions such as a melt state or the like.

The polyesterdiol used in the present invention thus contains at least one urethane bond per number average molecular weight of 5,000.

The diisocyanate which is added to the produced polyesterdiol as a component having a number average molecular weight of at least of 5,000, preferably at least 10,000, and substantially hydroxyl groups at the terminals thereof in order to increase the molecular weight is not particularly limited. Examples of diisocyanates include commercially available compounds such as tolylene-2,4-diisocyanate, a mixture of tolylene-2,4-diisocyanate and tolylene-2,6-diisocyanate, diphenylmethane diisocyanate, naphthylene-1,5-diisocyanate, xylylene diisocyanate, hydrogenated xylylene diisocyanate, hexamethylene diisocyanate, isophorone diisocyanate and the like. Hexamethylene diisocyanate and isophorone diisocyanate are preferable from the viewpoint of hue of the produced resin, reactivity and so on.

Although the amount of the diisocyanate added depends upon the molecular weight of the polyesterdiol procured, the amount is 0.1 to 5 parts by weight, preferably 0.5 to 3 parts by weight, and more preferably 1 to 2 parts by weight, based on 100 parts by weight of polyesterdiol. Although it is theoretically optimum for the equivalent ratio between hydroxyl groups and isocyanate groups to be 1, the use of one of the components in excess at an equivalent ratio of about 0.5 causes no practical problems.

The diisocyanate is preferably added to the polyesterdiol in a uniform melt state without a solvent under conditions where agitation can be easily carried out. Alternatively, the diisocyanate can be added to the solid polyesterdiol, and the mixture can be melted and mixed in an extruder. However, it is generally practical to add the diisocyanate to the polyesterdiol in a production apparatus or the polyesterdiol in a melt state (for example, in a kneader).

The aliphatic polyester containing urethane bonds can be compounded with lubricants, coloring agents, other polymers, release agents, fillers and reinforcing agents.

The aliphatic polyester containing urethane bonds is biodegradable and can thus be completely decomposed by bacteria in the soil within 2 to 6 months. The aliphatic polyester is thus a very useful polymer in view of environmental issues and is expected to be applied to the manufacture of biodegradable shopping bags, garbage bags, agricultural films, cosmetic, detergent and bleaching agent containers, fishing line, fishing nets, a rope, binding naterials, surgical gut and sanitary cover stock material.

### EXAMPLES

The present invention is described in detail below with reference to the examples.

The number average molecular weight and the weight average molecular weight were measured by GPC.

The measurement conditions were as follows:
Apparatus used:
   Shodex GPC SYSTEM-11 (produced by Showa Denko) Eluting solution:
   5 mM CF₃COONa/HFIP (hexafluoroisopropanol)
Column:
   Sample Column HFIP-800P
      HFIP-80M× 2
   Reference Column HFIP-800R× 2
   Column Temperature: 40°C
   Flow rate: 1.0 ml/min.
Detector:
   Shodex RI
   Standard PMMA (Shodex STANDARD M-75)

### Example 1

300 g of 1,4-butanediol, 348 g of succinic acid and 0.13 g of dibutoxydiacetoacetoxytitanium ("Nursem Titanium" produced by Nippon Chemical Industry Co., Ltd.) were charged in a 1 ℓ separable flask equipped with an agitator, a reflux condenser, a gas inlet tube and a thermometer, followed by esterification at 200 to 205°C in a stream of nitrogen gas to obtain an acid value of 7.9. Glycol elimination reaction was then effected at 210 to 215°C for 8 hours under pressure finally reduced to 0.5 Torr to obtain polyesterdiol (I) which had Mn of 16,600 (m = 96), Mw of 41,500, Mw/Mn of 2.5 and a melting point (capillary method) of about 115°C , and which was a white wax-like polymer at room temperature due to crystallinity.

7 g of hexamethylene diisocyanate was then added to 540 g of the thus-obtained polyesterdiol (I) under agitation in a melt state at 210°C .

The viscosity rapidly increased without producing gelation.

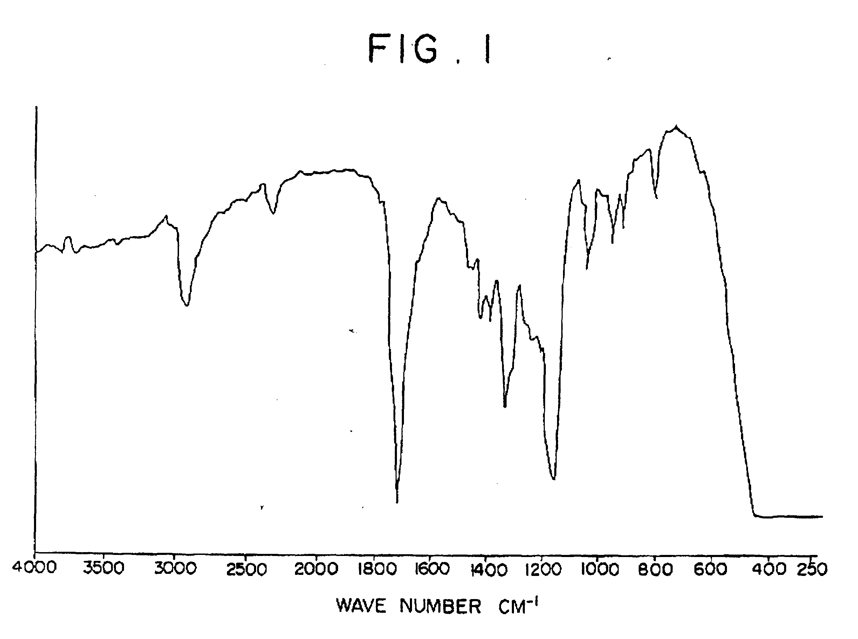

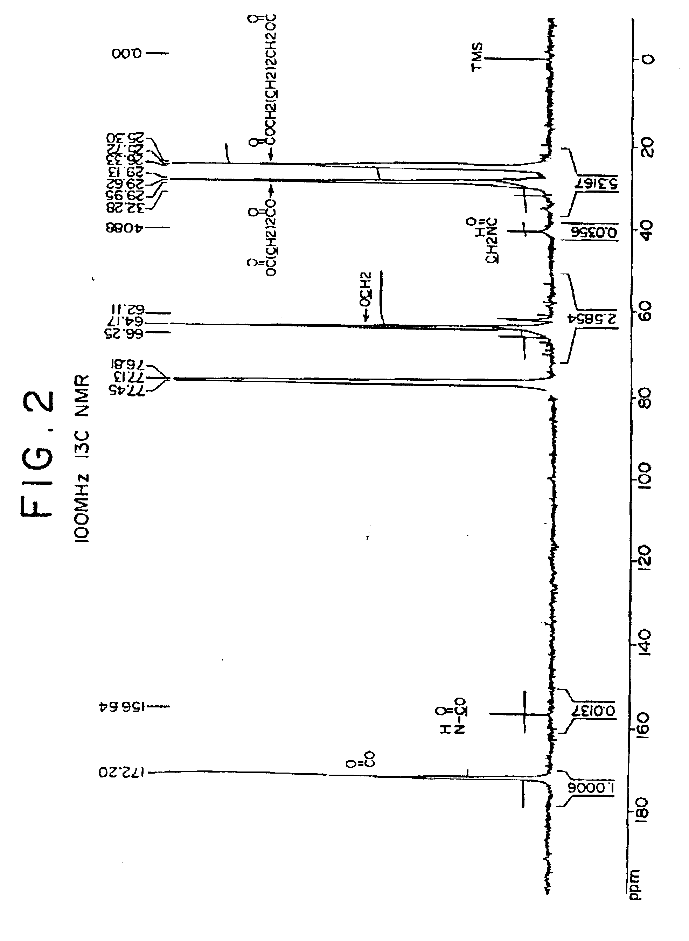

The aliphatic polyester (A) produced and containing small amounts of urethane bonds had Mn of 32,000, Mw of 98,000 and Mw/Mn of 3.1. The aliphatic polyester (A) corresponds to the above formula where M is 0. Fig.1 and 2 respectively show an infrared absorption spectrum and an NMR spectrum of the aliphatic polyester (A).

The aliphatic polyester (A) showed a viscosity of 233 poise in a 10 % ortho-chlorophenol solution at 25°C , melting point of about 120°C and a melt flow rate MFR (JIS K 7210: 190°C , 2.16kg) of 1.9.

The aliphatic polyester (A) was melted at 190°C and formed into an extruded film by using a T-die, and the film was then stretched at 4× 2.5 times at 80°C to produce a transparent film having thickness of 35 a to 40µm. The thus-produced film was extremely tough and had a lengthwise tensile strength of 14.9 Kg/cm² .

### Examples 2 to 10

1200 g of 1,4-butanediol, 1416 g of succinic acid, and 0.6 g of tetraisopropoxytitanium were charged in a 5 ℓ separable flask equipped with an agitator, a reflux condenser, a gas inlet tube and a thermometer, followed by esterification at 200 to 205°C in a stream of nitrogen gas to obtain an acid value of 6.1. Glycol elimination reaction was then effected at 215 to 220°C for 8 hours under pressure finally reduced to 0.5 Torr to obtain polyesterdiol (II) which had Mn of 15,900 (m = 92), Mw of 42,900, Mw/Mn of 2.7 and a melting point of 115°C and an acid value of substantially zero and which was a white wax-like polymer at room temperature due to crystallinity.

200 g of the thus-obtained polyesterdiol (II) was melted at 200°C , and hexamethylene diisocyanate was then added in various amounts to the polyesterdiol in a melt state, followed by reaction.

The results are shown in Table 1.

**TABLE 1**

| Example | hexamethylenediisocyanate | | Molecular weight | | | m.p. ≒°C | MFR (g/10min) |
|---|---|---|---|---|---|---|---|
| | addition g | (wt parts) | Mn | Mw | Mw/Mn | | |
| 2 | 1.6 | (0.8phr) | 20600 | 55600 | 2.7 | 118 | >1000 |
| 3 | 2.0 | (1.0phr) | 26100 | 78300 | 3.0 | 118 | 90 |
| 4 | 2.4 | (1.2phr) | 33600 | 111000 | 3.3 | 118 | 1.08 |
| 5 | 2.8 | (1.4phr) | 39000 | 142000 | 3.6 | 120 | 0.26 |
| 6 | 3.2 | (1.6phr) | 43200 | 177000 | 4.1 | 120 | 0.08 |
| 7 | 3.6 | (1.8phr) | 50100 | 247000 | 4.9 | 120 | 0.01 |
| 8 | 4.0 | (2.0phr) | 58000* | >500000 | >8.6 | 120 | <0.01 |
| 9 | 4.4 | (2.2phr) | gel state** | - | - | - | - |
| 10 | 4.8 | (2.4phr) | gel state** | - | - | - | - |

| | | | | | | | |
|---|---|---|---|---|---|---|---|
| Note: * gel partially insoluble in solvent | | | | | | | |
| ** insoluble in solvent and MW inmeasurable | | | | | | | |

Although the film moidability was observed in all aliphatic polyesters containing urethane bonds except polyesterdiol (II), the tear strength of Examples 2 and 3 was not always sufficient. Although Examples 2 and 3 could thus be torn by hand, Examples 4 to 10 could not. When a film having a thickness of about 50 µm was monoaxially stretched by three times. Examples 4 and 5 showed tearing strength of 11.4 Kg/mm² and 16.9 Kg/mm², respectively, and were thus extremely strong.

The 10 % o-chlorophenol solution of aliphatic polyester of Example 4 had a viscosity of 141 poise, and MFR of Example 4 was 1.08.

### Examples 11 to 19

1200 g of 1,4-butanediol, 1416 g of succinic acid and 0.6 g of dibutoxydiacetoacetoxytitanium were charged in a 5 ℓ separable flask equipped with an agitator, a reflux condenser, a gas inlet tube and a thermometer, followed by esterification at 230 to 205°C in a stream of nitrogen gas to obtain an acid value ot 9.4. Glycol elimination reaction was then effected at 215 to 220°C for 6 hours under pressure finally reduced to 0.5 Torr to obtain polyesterdiol (III) which had a number average molecular weight of 17,300 (m = 80), a weight average molecular weight (Mw) of 50,200, a molecular weight distribution (Mw/Mn) of 2,9, a melting point of 115°C and an acid value of substantially zero and which was in a white wax-like polymer state at room temperature due to crystallinity.

200 g of the thus-obtained polyesterdiol (III) was melted at 200°C, and isophorone diisocyanate was added in various amounts to the polyesterdiol (III) in a melt state, followed by reaction.

The results obtained are shown in Table 2.

**TABLE 2**

| Example | isophorondiisocyanate | | Molecular weight | | Mw/Mn | M.P. ≒°C | MFR (g/10min) |
|---|---|---|---|---|---|---|---|
| | g | (wt part) | Mn | Mw | | | |
| 11 | 2.0 | (1.0phr) | 19100 | 52900 | 2.9 | 120 | >1000 |
| 12 | 2.4 | (1.2phr) | 25800 | 77600 | 3.0 | 120 | 110 |
| 13 | 2.8 | (1.4phr) | 32000 | 90900 | 2.8 | 122 | 4,5 |
| 14 | 3.2 | (1.6phr) | 39100 | 132000 | 3.4 | 122 | 0.30 |
| 15 | 3.6 | (1.8phr) | 44600 | 191000 | 4.3 | 122 | 0,04 |
| 16 | 4.0 | (2.0phr) | 51000 | 270100 | 5.3 | 125 | <0.01 |
| 17 | 4.4 | (2.2phr) | 54700 | 359000 | 6.6 | 125 | <0.01 |
| 18 | 4.8 | (2.4phr) | 55100* | 379000* | 6.9 | 125 | <0.01 |
| 19 | 6.0 | (3.0phr) | gel state** | - | - | - | - |

| | | | | | | | |
|---|---|---|---|---|---|---|---|
| Note : * gel partially insoluble in solvent | | | | | | | |
| ** insoluble in solvent and MW inmeasurable | | | | | | | |

The film having a thickness of 50 µm and obtained by monoaxial stretching by three times, the aliphatic polyester containing urethane bonds obtained in Example 15 had a tensile strength of 17.1 Kg/mm², and the viscosity of a 10 % o-chlorophenol solution was 690 poise.

### Examples 20 to 22

300 g of 1,4-butanediol and each of the dicarboxylic acid mixtures below were charged in a 1 ℓ separable flask equipped with an agitator, a reflux condenser, a thermometer and a gas inlet tube.

### Example 20 [polyesterdiol (IV)]

| | |
|---|---|
| succinic acid | 240 g (80 mol%) |
| adipic acid | 88 g (20 mol %) |

### Example 21 [polyesterdiol (V)]

| | |
|---|---|
| succinic acid | 255 g (85 mol %) |
| sebacic acid | 91 g (15 mol %) |

### Example 22 [polyesterdiol (VI)]

| | |
|---|---|
| succinic acid | 255 g (85 mol %) |
| 1,10-decandioic acid | 104 g (15 mol %) |

Esterification was effected at 205 to 210°C in a stream of nitrogen gas to obtain acid values of 7.1, 9.3 and 7.4 in Examples 20, 21 and 22, respectively. 0,1 g of tetraisopropoxytitanium was then added to each of the reaction solutions, followed by glycol elimination reaction at 215 to 220°C for 6 hours under pressure finally reduced to 0.6 Torr. The properties of the thus-obtained polyesterdiols were as follows:

### Polyesterdiol (IV)

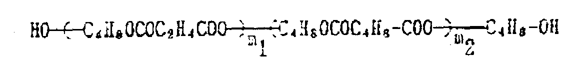

(succinate unit ml = 68, adipate unit m₂ = 16)
Melting point= 90°C
- Mn: : 14,900
- Mw: : 80,500
Hue: light ivory wax-like polymer

### Polyesterdiol (V)

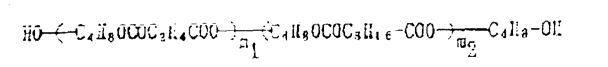

(succinate unit ml = 71, adipate unit m₂ = 13)
Melting point= 94°C
- Mn: : 15,600
- Mw: : 78,000
Hue: light ivory wax-like polymer

### Polyesterdiol (VI)

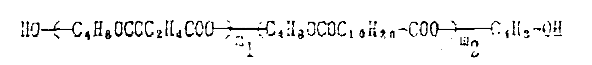

(succinate unit mₜ = 67, 1,10-decandioate unit m₂ = 11)
Melting point= 93°C
- Mn: : 14,400
- Mw: : 79,000
Hue: lightly yellowish brown wax-like polymer

300 g of each polyesterdiol was melted at 200°C, and 5 g of hexamethylene diisocyanate was then added.

The physical properties of the thus-obtained aliphatic polyesters each containing small amounts of urethane bonds and of the films each having a thickness of 50 to 55 and obtained by monoaxial stretching, by three times are summarized in Table 3.

**TABLE 3**

| Example | Molecular weight | | | M.P.=°C | Tensile strength (Kg/mm²) | MFR (g/10min) |
|---|---|---|---|---|---|---|
| | Mn | Mw | Mw/Mn | | | |
| 20 (polyesterdiol IV) | 34900 | 189000 | 5.4 | 95 | 12.1∼14.9 | 1.7 |
| 21 (polyesterdiol V) | 40700 | 202000 | 5.0 | 98 | 11.9∼13.7 | 0.18 |
| 22 (polyesterdiol VI) | 38900 | 214000 | 5.5 | 98 | 10.3∼13.9 | 0.30 |

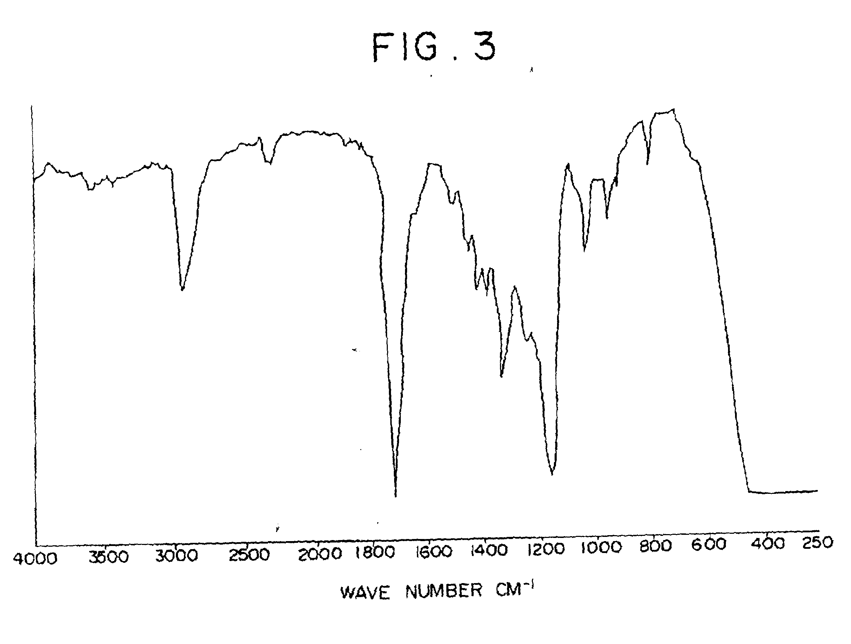

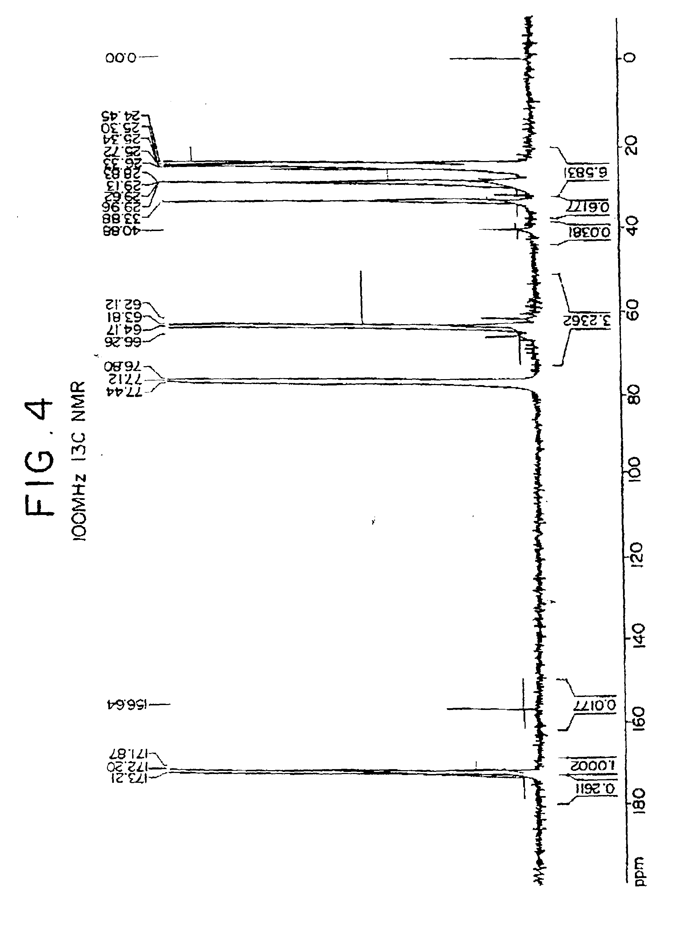

For reference, the infrared analysis chart and the 13C NMR chart of the aliphatic polyester (B) obtained in Example 20 are shown in Figs. 3 and 4, respectively.

### Examples 23 to 28

840 g of ethylene glycol, 1416 g of succinic acid and 0.5 g of tetraisopropoxytitanium were charged in a 5 ℓ separable flask equipped with an agitator, a reflux condenser, a gas inlet tube and a thermometer, followed by esterification at 200 to 205°C to obtain an acid value of 9.4. Glycol elimination reaction was then effected at 215 to 220°C for 8 hours under pressure finally reduced to 0.5 Torr to obtain white wax-like polyesterdiol (VII) which had an acid value of substantially zero, a number average molecular weight (Mn) of 14,700 (m = 100), a weight average molecular weight (Mw) of 39,000 and a melting point of 103°C .

200 g of the thus-obtained polyesterdiol (VII) was melted at 200°C , and hexamethylene diisocyanate was then added in various amounts to the polyesterdiol in a melt state, followed by reaction.

The results obtained are shown in Table 4.

**TABLE 4**

| Example | hexamethylenediisocyanate | | Molecular weight | | | MFR (g/10min) |
|---|---|---|---|---|---|---|
| | addition g | (wt part) | Mn | Mw | Mw/Mn | |
| 23 | 2.0 | (1.0phr) | 26900 | 81400 | 3.0 | >1000 |
| 24 | 2.6 | (1.3phr) | 33300 | 114000 | 3.4 | 500 |
| 25 | 3.2 | (1.6phr) | 40900 | 151000 | 3.7 | 150 |
| 26 | 3.8 | (1.9phr) | 49100 | 252000 | 5.1 | 56 |
| 27 | 4.4 | (2.2phr) | 57000* | >500000 | >8.8 | 24 |
| 28 | 5.0 | (2.5phr) | gel state** | - | - | - |

| | | | | | | |
|---|---|---|---|---|---|---|
| Note: * gel partially insoluble in solvent | | | | | | |
| ** insoluble in solvent and MW inmeasurable | | | | | | |

Although the polyesterdiol (VII) had no film moldability and was easily torn by hand, a film having a thickness of about 50 obtained by monoaxially stretching the aliphatic polyester containing urethane bonds exhibited the following tensile strength:
Aliphatic polyester of Example 24: 11.7 Kg/mm²
Aliphatic polyester of Example 26: 16.9 Kg/mm²
Both films were significantly strong and could not be torn by hand.

The viscosity of a 10 % ortho-chlorophenol was the following:
Aliphatic polyester of Example 24: 67 poise
Aliphatic polyester of Example 26: about 300 poise

### Example 29

250 g of 1,4-butanediol, 250 g of succinic anhydride, and 0.5 g of tetraisopropoxytitanium were charged in a 1 ℓ separable flask equipped with an agitator, a reflux condenser, a gas inlet tube and a thermometer. After cyclic addition reaction of succinic anhydride which started at about 130°C was effected to about 180°C , heating was resumed. Esterification was then effected at 210 to 215°C in a stream of nitrogen gas to obtain an acid value of 7.8. Glycol elimination reaction was then effected at 215 to 220°C for 6 hours under pressure finally reduced to 0.4 Torr.

The thus-obtained polyesterdiol (VIII) had a melting point of 115°C , a number average molecular weight (Mn) of 16,000 and a weight average molecular weight (Mw) of 43,500 and was slightly ivory white crystal in a wax-like state at room temperature.

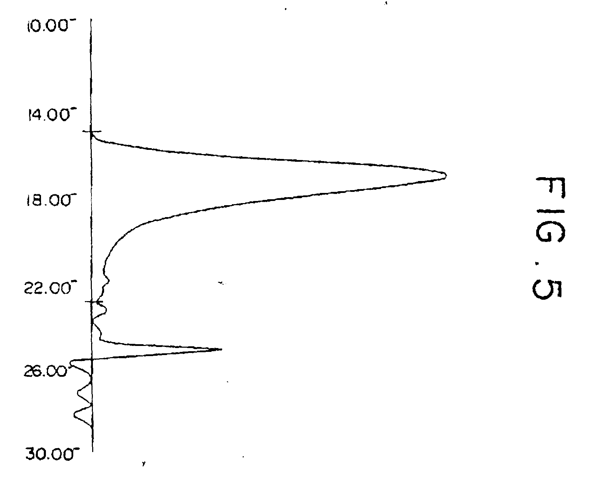

Fig. 5 shows a GPC chart for measuring the molecular weight of the polyesterdiol (VIII).

300 g of the polyesterdiol (VIII) was remelted, and 4.5 g of hexamethylene diisocyanate was added to the polyesterdiol (VIII) at 205°C. The viscosity abruptly increased, without producing gelation.

The aliphatic polyester (C) containing small amounts of urethane bonds was a slightly ivory white wax-like polymer and had a melting point of 118 to 120°C, a number average molecular weight (Mn) of 35,900, a weight average molecular weight (Mw) of 269,000 and a Mw/Mn value of about 7.4 and a melt flow rate of 0.90.

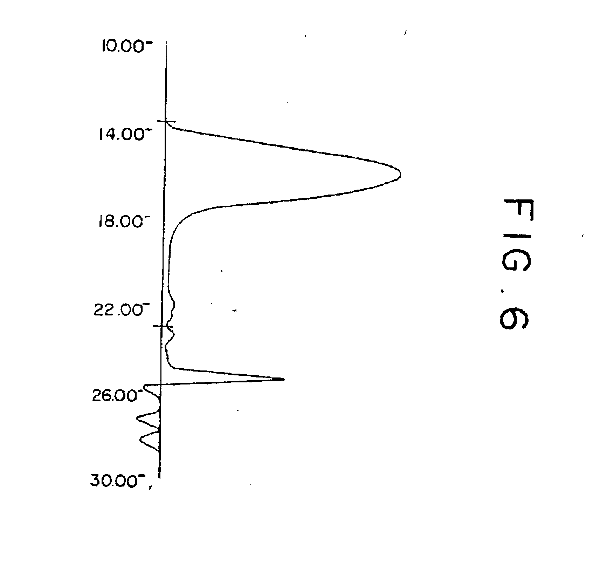

Fig. 6 shows a GPC chart for measuring the molecular weight of the aliphatic polyester (C).

The aliphatic polyester (C) was press-molded and then monoaxially stretched by three times to obtain a transparent film which had thickness of 50 and a tensile strength of 14.4 too 17.2 Kg/mm² and which was extremely strong.

### Example 30

Polyesterdiol (IX) was obtained by the same method as that employed in Example 29 except that 295 g succinic acid used in place of succinic annydride was a white wax-like polymer and had a melting point of 115°C, a number average molecular weight (Mn) of 5,700, a weight average molecular weight (Mw) of 39,800.

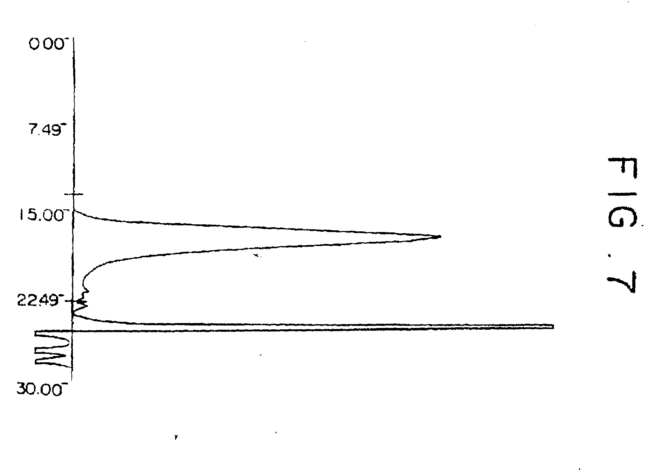

Fig. 7 shows the result of GPC measurement of the molecular weight of the polyesterdiol (IX).

Aliphatic polyester (D) containing urethane bonds and obtained by adding 4.5 g of hexamethylene diisocyanate to 300 g of polyesterdiol (IX) exhibited a melting point of 118 to 120°C, a number average molecular weight (Mn) of 35,300, a weight average molecular weight (Mw) of 109,000 and a Mw/Mn value of about 3 and a melt flow rate of 1.40.

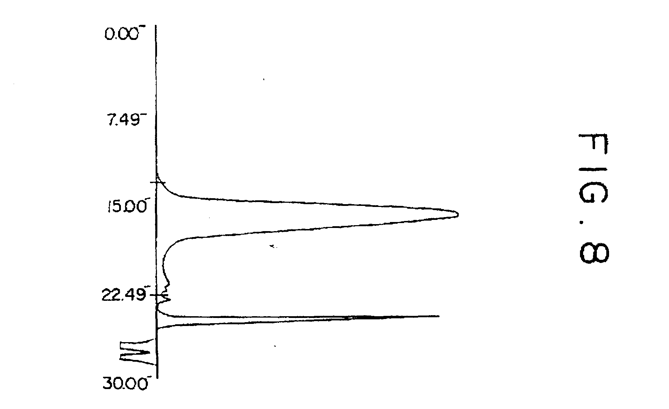

Fig. 8 shows the result or GPC measurement of the nudmber average molecular weight (Mn) of the polyester (D).

Comparisons between Figs. 5 and 7, and between Figs. 6 and 8 reveal that the aliphatic polyester obtained by using succinic anhydride as an acid component had a molecular weight distribution wider than that of the polyester obtained by using succinic acid as an acid component.

### Example 31

272 g of 1,6-hexanediol and 460 g of 1,10-decandioic acid were charged in a 1 ℓ separable flask equipped with an agitator, a reflux condenser and a thermometer, followed by esterification at 200 to 205°C in a stream of nitrogen gas to obtain an acid value of 7.3. 1.5 g of tetraethoxy-germanium produced by Nippon Chemical Industry Co., Ltd. was added to the reaction product, followed by glycol elimination reaction et 210 to 215°C for 18 hours under pressure finally reduced to 0.4 Torr to obtain poyesterdiol (X) which had a number average molecular weight (Mn) cf 16,100 (m = 52), weight average molecular weight (Mw) of 56,400, a melting point of 80 to 85°C and which was a white wax-like polymer at room temperature.

When 10 g ( = 1.5 phr ) of isophorone diisocyanate was added to the polymer obtained after the temperature was increased to 200°C, the viscosity abruptly increased.

The mixture was agitated at the same temperature for 10 minutes to obtain aliphatic polyester (E) containing small amounts of urethane bonds which was a slightly yellowish white polymer at room temperature and which exhibited a number average molecular weight (Mn) of about 45,000, weight average molecular weight (Mw) of 159,000 and molecular weight distribution (Mw/Mn) of 3.5, and melting point of 88 to 90°C.

The aliphatic polyester (E) was pressed between polyethylene terephthalate films at 120°C and 10 Kg/cm² to obtain a disk-like sheet having a thickness of 120 to 130.

Although the sheet obtained from the polyesterdiol (X) could easily be torn by hand, the sheet obtained by the aliphatic polyester (E) containing urethane bonds could not.

The film obtained by stretching by 5 × 5 times and having a thickness of about 30 *µ* m exhibited a tensile strength of 4.1 Kg/mm².

### Example 32

115 g of ethylene glycol, 40 g of 1,4-butanediol, 460 g of 1,10-decandioic acid and 0.02 g of tetrabutoxytitanium were charged in a 1 ℓ separable flask equipped with an agitator, a reflux condenser, a thermometer and a gas inlet tube, followed by esterification at 200 to 205°C in a stream of nitrogen gas to obtain an acid value of 5.4. Glycol elimination reaction was then effected at 215 to 220°C for 10 hours under pressure finally reduced to 0.6 Torr to obtain polyesterdiol (XI) having a number average molecular weight (Mn) of 16,400, weight average molecular weight (Mw) of 54,100. The polyesterdiol (IX) took on a brownish wax-like state by cooling to room temperature, and the melting point thereof was about 65°C.

The whole amount of the thus-obtained polyesterdiol (IX) was melted by heating to 200 to 202°C, and 5 g of xylylene diisocyanate was added to the polyesterdiol (IX) under agitation.

The viscosity abruptly increased, without producing gelation.

After agitation for 20 minutes, the aliphatic polyester (F) containing urethane bonds exhibited a number average molecular weight (Mn) of 39,400, weight average malecular weight (Mw) of 130,000, molecular weight distribution (Mw/Mn) of 3.3, a melting point of about 68 to 70°C and a melt flow rate of 20 and was a lightly yellowish brown wax-like polymer.

The film having a thickness of 30 µm and obtained by biaxially stretching the aliphatic polyester (F) two times in each direction had a tensile strength (measured according to JIS K 6760) of 14,4Kg/mm² .

### Example 33

204 g of ethylene glycol, 354 g of succinic acid, and 0.03 g of tetraisopropyltitanate were charged in a 1 ℓ separable flask equipped with an agitator, a reflux condenser, a thermometer and a gas inlet tube, followed by esterification at 195 to 205°C in a stream of nitrogen gas to obtain an acid value of 8.9. Glycol elimination reaction was then effected at 210 to 215°C for 10 hours under pressure finally reduced to 0.5 Torr to obtain polyesterdiol (XII) having a number average molecular weight (Mn) of 13,900 and a weight average molecular weight (Mw) of 52,800. The polyesterdiol (XII) became a white wax-like polymer by cooling to room temperature, and exhibited a melting point of about 105°C and an acid value of substantially zero.

The whole amount the polyesterdiol (XII) remaining after 10 g ( = 1.2 phr ) was removed was melted by heating to 205 to 206°C and 6 g of hexamethylene diisocyanate was added to the polyesterdiol (XII) under agitation.

The viscosity of the mixture abruptly increased without producing gelation.

The mixture was agitated for 20 minutes so as to be uniform and was then cooled. The thus-obtained aliphatic polyester (G) containing urethane bonds had a number average molecular weight (Mn) of 26,000, weight average molecular weight (Mw) ot 98,000, molecular weight distribution (Mw/Mn) of 3.8 and a melting point of 107 to 108°C, a melt flow rate of more than 1,000 and was a slightly yellowish white wax-like polymer.

An attempt was made to produce a film having a thickness of about 30 µm at 80°C by stretching both the polyesterdiol (XII) and the aliphatic polyester (G) 3 × 4 times in each direction using a biaxial stretching machine. The polyesterdiol (XII) was broken immediately after stretching was started, and no film was obtained therefrom. However, a transparent film was formed from the aliphatic polyester (G). The transparent film formed had a tensile strength (measured according to JIS K 6760) of 16.4 Kg/mm².

### Example 34

140 g ethylene glycol, 176 g of succinic acid, 58 g of adipic acid and 0.015 g of titanium oxyacetylacetonate were charged in a 1 ℓ separable flask equipped with an agitator, a reflux condenser, a thermometer and a gas inlet tube, followed by esterification at 195 to 205°C in a stream of nitrogen gas to obtain an acid value of 7.1. Glycol elimination reaction was then effected at 215 to 220°C for 10 hours under pressure finally reduced to 0.5 Torr to obtain polyesterdiol (XIII) having a number average molecular weight (Mn) of 12,100, a weight average molecular weight (Mw) of 60,500. The polyesterdiol (XIII) became a slightly yellowish brown wax-like polymer when being cooled to room temperature, and the melting point was about 75°C. The whole amount of the polyesterdiol (XIII) remaining after 10 g was removed was melted by heating to 205 to 206°C and 6 g ( = 2 phr ) of isophorone diisocyanate was added to the polyesterdiol (XIII) under agitation.

The viscosity of the resultant mixture abruptly increased without producing gelation.

The mixture was agitated for 20 minutes and then cooled to obtain aliphatic polyester (H) containing urethane bonds. The thus-obtained aliphatic polyester (H) exhibited a number average molecular weight (Mn) 31,400, weight average molecular weight (Mw) of 158,000, molecular weight distribution (Mw/Mn) of 5.0, a melting point of about 80°C and a melt flow rate of 600 and was a slightly yellowish white wax-like polymer.

An attempt was made to produce a film having a thickness of about 30 µm by stretching each of the polyesterdiol (XIII) and the aliphatic polyester (H) by 3× 4 times at 80°C using a biaxial stretching machine. The polyesterdiol (XIII) was broken immediately after stretching was started, and no film was formed. A transparent film was formed from the aliphatic polyester (H). The transparent film formed had a tensile strength (measured according to JIS K 6760) of 18.2 Kg/mm².

### Example 35

The high molecular weight alipatic polyester film obtained in Exadmples 1, 20 and 33 were buried in earth in 10 cm depth in summer season. Within 2 months degradation of films by microorganisms commenced and the films disappeared completely in one year.

## Claims

1. Use in the manufacture of biodegradable articles, namely shopping bags, garbage bags, agricultural films, cosmetic detergent and bleaching agent containers, fishing line, fishing nets, rope, binding materials, surgical gut or sanitary cover stock material, of a saturated aliphatic polyester containing urethane bonds, the polyester having a number average molecular weight (Mn) of at least 10,000, a weight average molecular weight (Mw) of at least 30,000, a molecular weight distribution (Mw/Mn) of at least 2.5, a viscosity of at least 10 poise in a 10% ortho-chlorophenol at 25°C, a melting point of at least 60°C and expressed by the following formula A: 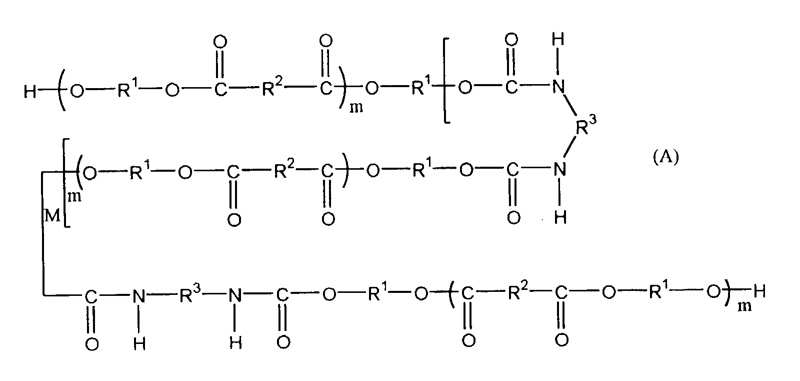 [wherein R¹ and R² are straight chain alkylene groups expressed by the formulae - (CH₂-CH₂-)-p and -(CH₂-CH₂)- q (where p and q are integer of 1 to 5) respectively, R³ is a diisocyanate residue, m is the same as described below, M is 0 or a positive integer];
said saturated aliphatic polyester being obtainable by a reaction between a polyesterdiol having a number average molecular weight (Mn) of at least 5,000, a weight average molecular weight (Mw) of at least 15,000, a molecular weight distribution (Mw/Mn) of at least 2.5 and expressed by the following formula B: 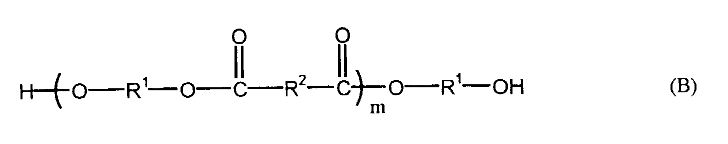 (wherein m indicates a number average degree of polymerization required for the polyesterdiol to have a number average molecular weight of at least 5,000) and a diisocyanate.

2. Use according to Claim 1, wherein R¹ is the alkylene group indicated by the formula:
-(CH₂-CH₂)-p
(where p is 1 or 2).

3. Use according to Claim 1, wherein R² is the alkylene group indicated by the formula:
-(CH₂-CH₂)-q
(where q is 1 or 2).

4. Use according to Claim 1, wherein the polyesterdiol is obtainable by a reaction between ethylene glycol and succinic acid or succinic anhydride.

5. Use according to Claim 1, wherein the polyesterdiol is obtainable by a reaction between 1,4- butanediol and succinic acid or succinic anhydride.

6. Use according to any one of Claims 1 to 3, wherein R³ is an alkylene or alicyclic group.

7. Use according to Claim 1, wherein R¹ is a tetramethylene group, R² is an ethylene group, and R³ is a hexamethylene group.

8. Use according to Claim 1 in which the aliphatic polyester is obtainable by reacting a polyesterdiol having a number average molecular weight (Mn) of at least 10,000, a weight average molecular weight (Mw) of at least 30,000, and a molecular weight distribution (Mw/Mn) of 3 to 8, with diisocyanate.

9. Use according to Claim 1, wherein the aliphatic polyester has a number average molecular weight of at least 20,000, a weight average molecular weight (Mw) of at least 100,000, a molecular weight distribution (Mw/Mn) of at least 3, melting point of at least 90°C, and a viscosity in a 10% ortho-chlorophenol solution of at least 100 poise.

10. Use according to Claim 1, wherein the aliphatic polyester has a number average molecular weight of 20,000 to 70,000, a weight average molecular weight (Mw) of 100,000 to 1,000,000, and a molecular weight distribution (Mw/Mn) of 3 to 8.

11. Use according to Claim 1, wherein R¹ and R² are two kinds of alkylene groups.

12. Use according to Claim 1, wherein the melt flow rate of the polyester is 0.01 to 1,000 g/10 min.

## Patentansprüche

1. Verwendung eines Urethanbindungen enthaltenden gesättigten aliphatischen Polyesters mit einem Molekulargewicht-Zahlenmittel (Mn) von mindestens 10000, einer massegemittelten Molekülmasse (Mw) von mindestens 30000, einer Molekulargewichtsverteilung (Mw/Mn) von mindestens 2,5, einer Viskosität von mindestens 10 Poise in einer 10 *%*-igen o-Chlorphenollösung bei 25 °C, einem Schmelzpunkt von mindestens 60 °C, und mit der folgenden Formel A: 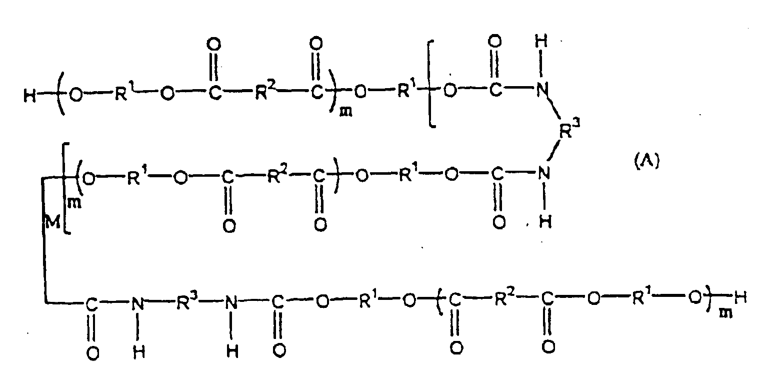 [worin R¹ und R² geradkettige Alkylengruppen der Formel -(CH₂-CH₂-)-p bzw. -(CH₂-CH₂)-q sind (worin p und q ganze Zahlen von 1 bis 5 sind), R³ ein Diisocyanatrest ist, m die gleiche Bedeutung, wie sie unten angegeben wird, besitzt, und M 0 oder eine positive ganze Zahl ist];
und der gesättige aliphatische Polyester erhältlich ist durch eine Umsetzung zwischen einem Polyesterdiol mit einem Molekulargewicht-Zahlenmittel (Mn) von mindestens 5000, einer massegemittelten Molekülmasse (Mw) von mindestens 15000, einer Molekulargewichtsverteilung (Mw/Mn) von mindestens 2,5, und mit der folgenden Formel B: 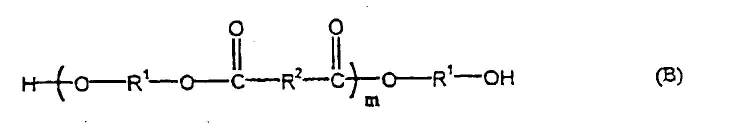 [worin m einen anzahlgemittelten Polymerisationsgrad bedeutet, der für das Polyesterdiol erforderlich ist, um ein Molekulargewicht-Zahlenmittel von mindestens 5000 zu besitzen] und einem Diisocyanat,
zur Herstellung von biologisch abbaubaren Gegenständen, nämlich Einkaufstaschen, Abfallbeutel, Behälter für kosmetische Reinigungs- und Bleichmittel, Angelschnüre, Fischernetze, Seile, Bindemittel, chirurgisches Nahtmaterial und hygienisches Abdeckmaterial.

2. Verwendung nach Anspruch 1, dadurch gekennzeichnet, daß R¹ die durch die Formel -(CH₂-CH₂)-p (worin p 1 oder 2 ist) dargestellte Alkylengruppe ist.

3. Verwendung nach Anspruch 1, dadurch gekennzeichnet, daß R² die durch die Formel -(CH₂-CH₂)-q (worin q 1 oder 2 ist) dargestellte Alkylengruppe ist.

4. Verwendung nach Anspruch 1, dadurch gekennzeichnet, daß das Polyesterdiol erhältlich ist durch eine Umsetzung zwischen Ethylenglykol und Bernsteinsäure oder Bernsteinsäureanhydrid.

5. Verwendung nach Anspruch 1, dadurch gekennzeichnet, daß das Polyesterdiol erhältlich ist durch eine Umsetzung zwischen 1,4-Butandiol und Bernsteinsäure oder Bernsteinsäureanhydrid.

6. Verwendung nach einem der Ansprüche 1 bis 3, dadurch gekennzeichnet, daß R³ eine Alkylen- oder alicyclische Gruppe ist.

7. Verwendung nach Anspruch 1, dadurch gekennzeichnet, daß R¹ eine Tetramethylengruppe, R² eine Ethylengruppe, und R³ eine Hexamethylengruppe ist.

8. Verwendung nach Anspruch 1, dadurch gekennzeichnet, daß der aliphatische Polyester erhältlich ist durch Umsetzen eines Polyesterdiols mit einem Molekulargewicht-Zahlenmittel (Mn) von mindestens 10000, einer massegemittelten Molekülmasse (Mw) von mindestens 30000 und einer Molekulargewichtsverteilung (Mw/Mn) von 3 bis 8, mit Diisocyanat.

9. Verwendung nach Anspruch 1, dadurch gekennzeichnet, daß der aliphatische Polyester ein Molekulargewicht-Zahlenmittel von mindestens 20000, eine massegemittelte Molekülmasse (Mw) von mindestens 100000, eine Molekulargewichtsverteilung (Mw/Mn) von mindestens 3, einen Schmelzpunkt von mindestens 90 °C, und eine Viskosität in einer 10 %-igen o-Chlorphenollösung von mindestens 100 Poise besitzt.

10. Verwendung nach Anspruch 1, dadurch gekennzeichnet, daß der aliphatische Polyester ein Molekulargewicht-Zahlenmittel von 20000 bis 70000, eine massegemittelte MoLekülmasse (Mw) von 100000 bis 1000000, und eine Molekulargewichtsverteilung (Mw/Mn) von 3 bis 8 besitzt.

11. Verwendung nach Anspruch 1, dadurch gekennzeichnet, daß R¹ und R² zwei Arten von Alkylengruppen sind.

12. Verwendung nach Anspruch 1, dadurch gekennzeichnet, daß der Schmelzindex des Polyesters 0,01 bis 1000 g/10 min beträgt.

## Revendications

1. Utilisation, dans la fabrication d'articles biodegradables, c'est-à-dire de sacs pour achats, de sacs à ordures, de pour l'agriculture, de conteneurs de détergents cosmétiques et d'agents de blanchiement, de lignes de pêche, de filets de pêche, de câbles, de matériaux de liaison, de boyaux chirurgicaux, ou de matériaux de recouvrement sanitaire, d'un polyester aliphatique saturé contenant des liaisons uréthanne, le polyester ayant un poids moléculaire moyen en nombre (Mn) d'au moins 10 000, un poids moléculaire moyen en poids (Mw) d'au moins 30 000, une distribution de poids moléculair (Mw/Mn) d'au moins 2,5, une viscosité d'au moins 10 poises dans 10% d'ortho-chlorophénol à 25°C, un point de fusion d'au moins 60°C et étant exprimé par la formule suivante A: 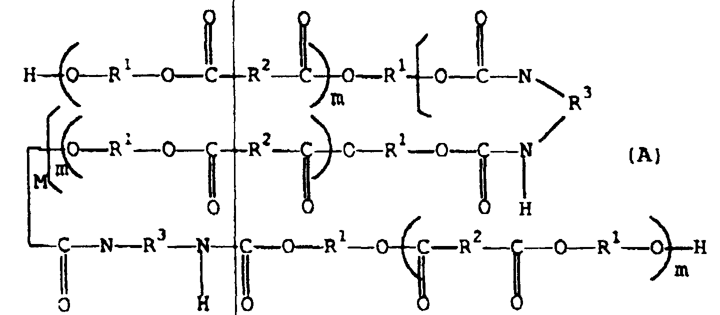 [où R¹ et R² sont des groupes alkylène à chaîne droite exprimés par les formules (CH₂.CH₂) -p et - (CH₂.CH₂) -q (où p et g sont des entiers de 1 à 5), respectivement, R³ est un résidu diisocyanate, m est identique à ce qui est décrit ci-dessous, M est 0 ou un entier positif]:
ledit polyester aliphatique saturé pouvant être obtenu par une reaction entre un polyester diol ayant un poids moléculaire moyen en nombre (Mn) d'au moins 5000, un poids moleculaire moyen en poids (Mw) d'au moins 15 000, une distribution de poids moléculaire (Mw/Mn) d'au moins 2,5 et étant exprimé par la formule suivante B: 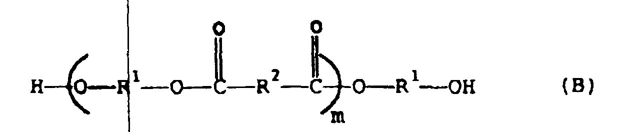 (où m indique degré moyen en nombre de polymérisation requis pour que le polyesterdiol ait un poids moléculaire moyen en nombre d'au moins 5000) et un diisocyanate.

2. Utilisation selon la revendication 1, où R¹ est le groupe alkylène indiqué par la formule:
- (CH₂-CH₂)-p (où p est 1 ou 2).

3. Utilisation selon la revendication 1, où R² est le groupe alkylène indiqué par la formule:
- (CH₂-CH₂)q (où q est 1 ou 2).

4. Utilisation selon la revendication 1, où le polyesterdiol peut être obtenu par une réaction entre de l'éthylène glycol et de l'acide succinique ou de l'anhydride succinique.

5. Utilisation selon la revendication 1, où le polyesterdiol peut être obtenu par une réaction entre du 1,4-butanediol et de l'acide succinique ou de l'anhydride succinique.

6. Utilisation selon l'une des revendications 1 à 3, où R³ est un groupe alkylène ou alicyclique.

7. Utilisation selon la revendication 1, où R¹ est un groupe tétraméthylène, R² est un groupe éthylène et R³ est un groupe hexaméthylène.

8. Utilisation selon la revendication 1 où le polyester aliphatique peut être obtenu par réaction d'un polyester diol ayant un poids moléculaire moyen en nombre (Mn) d'au moins 10 000, un poids moléculaire moyen en poids (Mw) d'au moins 30 000, et une distribution de poids moléculaire (Mw/Mn) de 3 à 8, avec du diisocyanate.

9. Utilisation selon la revendication 1, où le polyester aliphatique a un poids moléculaire moyen en nombre d'au moins 20 000, un poids moléculaire moyen en poids (Mw) d'au moins 100 000. une distribution de poids moléculaire (Mw/Mn) d'au moins 3, un point de fusion d'au moins 90°C, et une viscosité dans une solution à 10% d'ortho-chlorophénol d'au moins 100 poises.

10. Utilisation selon la revendication 1, où le polyester aliphatique a un poids moléculaire moyen en nombre de 20 000 à 70 000, un poids moléculaire moyen en poids (Mw) de 100 000 à 1 000 000, et une distribution de poids moleculaire (Mw/Mn) de 3 à 8.

11. Utilisation selon la revendication 1, où R¹ et R² sont deux types de groupes alkylène.

12. Utilisation selon la revendication 1, où le débit en phase fondue du polyester est de 0.01 à 1 000 g/10 minutes.
